# EUROPEAN PATENT SPECIFICATION

(11) **EP 2 131 467 B1**
(45) Date of publication and mention of the grant of the patent: **10.04.2013**
(21) Application number: 08002896.2
(22) Date of filing: 16.02.2008
(51) Int. Cl.: H02H 3/02, B61L 5/18

(54) **Quick and safe electronic fuse**
Schnelle und sichere elektronische Sicherung
Fusible électronique sécurisé et rapide

(43) Date of publication of application: 09.12.2009
(73) Proprietor: Thales Deutschland GmbH, 70435 Stuttgart (DE)
(72) Inventor: Telefont, Heinz, 3500 Krems/Egelsee (DE)
(74) Representative: Kohler Schmid Möbus

(56) References cited:
- US-A- 3 868 552

## Description

### Background of the invention

The invention relates to an electronic circuit for protecting an electronic component,

in particular an LED electronic component of a railway security device, comprising
- a voltage supply,
- a first fuse, with a first nominal current, and
- an electronic component,
   wherein the voltage supply, the first fuse and the electronic component are connected in series,
- a second fuse, with a second nominal current,
   wherein the second fuse is connected in series with the first fuse,
- an auxiliary circuit, comprising auxiliary circuit inputs connected in parallel to the electronic component, and auxiliary circuit outputs,
wherein the auxiliary circuit controls the current at the auxiliary circuit outputs by means of the voltage present at the auxiliary circuit inputs.

Railway security devices, such as railway signals, require a very close surveillance with respect to their proper function. If such a railway security device does not work properly, and countermeasures are not taken promptly, the safety of train drivers or passengers may be at stake.

One of the most common problems of a railway security device is a short circuit in an electronic component. In order to protect the electronic component itself, and to prevent undesired malfunctions of the electronic components which may confuse or endanger the railway service, an electronic component which is subject to a short circuit should be deactivated as soon as possible.

For deactivating electronic components subject to a short circuit within an electronic circuit, it is well known to connect a fuse in series with the electronic component. The fuse has a so called nominal current, i.e. the maximum current which may flow safely through the fuse. If the current through the fuse exceeds the nominal current, the fuse "blows", i.e. brakes the path for the electric current, typically due to a wire melting within the fuse. In case of a normal operation of the electronic component, its resistance is so high that the electric current within the electronic circuit (and thus also within the fuse) is smaller than or equal to the nominal current. If the protected electronic component suffers from a short circuit, the resistance of the electronic component drops sharply, and the current within the electronic circuit rises high above the nominal current. As a result, the fuse blows, and the electronic component is safe.

The time it takes for a fuse to blow is dependent on the degree the current through the fuse exceeds the nominal current. If the current through the fuse is high above the nominal current, such as ten times as high as the nominal current, the fuse blows practically immediately, i.e. within a fraction of a second. However, if the current through the fuse is only little above the nominal current, such as 1.5 times as high as the nominal current, it may take pretty long for the fuse to blow, such as several seconds or even minutes.

In railway technology, electronic components are used along the railway tracks, such as LED devices in railway signals. To power these trackside electronic components, long power supply lines are necessary, often reaching over several kilometers. As a result, the power supply line itself may cause a significant resistance. When powering an electronic component with such a long power supply line, the resistance of the power supply line limits the current through the fuse in case of a short-circuit within the electronic component. This means that the current through the fuse in case of a short circuit of the electronic component is also limited, what may cause a significant delay until the fuse blows.

If the delay is too long, considerable damage at the protected electronic component may occur, and even the railway service may become unsafe.

US 3,868,552 A discloses an electrical circuit and interrupter, comprising two fuses connected in series to a load terminal. In parallel to the terminals of a powersource, there is a current-multiplying circuit, comprising a transformator, with a secondary coil connecting between the two fuses. In case of an electrical disturbance on the electrical powersource, the current-multipyling circuit by means of the transformator causes the fuses to open more quickly.

### Object of the invention

It is the object of the invention to introduce an electronic circuit with a faster protection for the electronic component.

### Short description of the invention

This object is achieved, in accordance with the invention, by an electronic circuit as introduced in the beginning, characterized in that the electronic circuit comprises a relay with a relay switch and switching inputs, wherein the relay switch is connected in parallel to the second fuse, wherein the relay switch has a default position of "open", and wherein the auxiliary circuit outputs are connected to the switching inputs of the relay,
and that the second nominal current is smaller than the first nominal current.

The second fuse is connected in parallel to a relay switch. During normal operation of the electronic component protected, said relay switch is closed and offers a low resistance bypass to the second fuse, so no significant current runs through the second fuse.

The relay switch is kept closed by means of an auxiliary circuit. As long as the electronic component operates normal, and therefore has its regular resistance, a regular current flows through the electronic circuit, and a regular voltage is present across the electronic component (according to Ohm's law). The voltage across the electronic component is used by the auxiliary circuit to control the relay switch: As long as the regular voltage is present, the relay switch is held in the closed position.

However, if the electronic component has a short circuit (or at least a significant drop in resistance), the voltage across the electronic component drops (Note that the voltage supply should provide a basically stable DC or AC voltage in order to recognize a drop of resistance of the electronic component in this way); some or all of the voltage of the voltage supply is then observed at other locations of the electronic circuit, typically at the first fuse and/or across the lines. The low voltage across the electronic component is no more sufficient to make the auxiliary circuit keep the relay switch closed, and the relay switch goes into its open default position (note that the default position may be defined by a spring). When the relay switch is open, the full current that flows through the electronic circuit (i.e. through the first fuse and the electronic component) also flows through the second fuse. Since the second fuse has a significantly lower nominal current than the first fuse, it blows significantly earlier than the first fuse.

Note that for the starting up of the inventive electronic circuit, up to the regular current initially flows through the second fuse. However, concurrent with the regular current, the voltage at the electronic component reaches the regular voltage, which causes the relay switch to close quickly. From then on, the regular current flows through the relay switch, and no more through the second fuse. Therefore, the second fuse only has to stand the regular current only for a very short time, if at all, what it can do without blowing.

The inventive electronic circuit is particularly designed for wire fuses as first and second fuse, but may in principle also be operated with other types of circuit breakers. Note that the first fuse is preferred a time-lag fuse (delay fuse), which is able to stand current peaks, in particular startup current peaks.

The first and second fuse as well as the auxiliary circuit and the relay are adapted to the needs of the electronic component to be protected, e.g. as far as nominal currents are concerned. Of course, the voltage supply is also adapted to the needs of the electronic component, e.g. as far as the voltage level is concerned. Note that the present invention can be used both with DC and AC voltage supplies.

Typical electronic components protected by the invention include LED electronic components of railway security devices, in particular so-called "Power LEDs", LED components in main signals (home signals), advance signals (approach signals), speed indicating devices, protection signals and signal repeaters. Inventive electronic circuits are preferably applied in railway systems, in particular railway security systems, but may be used and applied in other technological areas as well.

The invention is particularly useful in case the current through the electronic circuit in case of a short circuit of the electronic component does not exceed two times the regular current, wherein the regular current is present when the electronic component operates normally. This current limit may in particular be caused by the resistance of power supply lines, for example within the electric circuit itself, or within the primary side of a transformer, wherein the electronic circuit is connected as secondary side.

### Preferred embodiments of the invention

In a preferred embodiment of the inventive electronic circuit, the auxiliary circuit provides enough current to the switching inputs of the relay such that the relay switch is kept in the "closed" position as long as at least a limiting voltage is present at the auxiliary circuit inputs, and wherein the auxiliary circuit provides so few or no current to the switching inputs of the relay such that the relay switch switches into the "open" position when less than the limiting voltage is present at the auxiliary circuit inputs. In this embodiment, the auxiliary circuit is designed to react to a drop of the voltage across the electronic device below the limiting voltage, which is typically chosen well above zero, but also well below the regular voltage. In case of a "true" short-circuit (i.e. zero resistance) in the electronic component, the voltage across the electronic component would drop to zero. However, in practice, defects typically result in a lowered, but non-zero resistance, and thus some voltage remains across the electronic circuit. With the above embodiment, the blowing of the second fuse may be deliberately triggered at the limiting voltage, resulting in a high and well-defined security level. The limiting voltage is most simply determined by the minimum current required at the switching inputs (i.e. typically at an electromagnetic coil acting against a spring pressing the relay switch into the default position) to make the relay switch change resp. keep its position (i.e. typically overcome the spring force), wherein the current at the switching inputs is a function of the voltage across the electronic component. Typically, the auxiliary circuit translates a higher voltage across the electronic component (i.e. at the auxiliary circuit inputs) into a higher current at the switching inputs (i.e. at the auxiliary current outputs) of the relay and vice versa. In order to adjust the current at the auxiliary circuit outputs at a given voltage level at the auxiliary circuit inputs, the voltage at the auxiliary circuit inputs may be may be translated by means of a simple potential divider within the auxiliary circuit. In more advanced designs, the auxiliary circuit may also comprise a comparator circuit for switching on and off the power at the auxiliary circuit outputs.

A preferred embodiment of the electric circuit is **characterized in that** the voltage supply is an AC voltage supply, in particular the secondary side (secondary coil) of a transformer, and that the auxiliary circuit comprises a rectifier, in particular a bridge rectifier. A typical AC voltage supply is of the type 50-60 Hz and 6-12 V; such AC voltage supplies are in use in railway technology, for example. In this case, the electronic circuit is often a secondary side of a transformer (with the voltage supply being the secondary coil); the primary side may have a conventional 230-240 V, 50-60 Hz net supply. By means of the rectifier, the auxiliary circuit has access to a particular current polarity, what may be useful to operate the relay switch (in particular if there are no other power sources for the auxiliary circuit than the auxiliary voltage inputs); the rectified voltage can be used (directly or indirectly) for controlling purposes. The rectifier is typically connected directly to the auxiliary circuit inputs.

In a highly preferred further development of this variant, the rectifier is connected to a loading capacity. With the loading capacity, the rectified voltage may be smoothed, thus simplifying its use for powering and/or controlling of the relay switch.

In a particularly preferred embodiment, the auxiliary circuit outputs are powered via the auxiliary circuit inputs. In this embodiment, the auxiliary circuit can do without any additional power sources, what keeps the overall design simple and inexpensive.

In another advantageous embodiment, the electrical circuit is **characterized in that** the auxiliary circuit comprises a transistor, with one of the auxiliary circuit inputs connected directly or indirectly to the collector or gate of the transistor, and with the auxiliary circuit outputs connected in series with base-emitter or source-drain of the transistor. In this embodiment, the voltage across the auxiliary circuit inputs (and thus across the electrical component) is amplified to provide a current at the auxiliary circuit outputs. This is a particularly simple way to establish an auxiliary circuit in accordance with the invention. Note that in this design, the relay should be adapted to the specific voltage level at the voltage supply.

In another advantageous embodiment, the auxiliary circuit comprises a voltage controlled current source (=VCCS), wherein voltage inputs of the VCCS are connected directly or indirectly to the auxiliary circuit inputs, and wherein the auxiliary circuit outputs are connected in series with current outputs of the VCCS. By means of the VCCS, it is possible to operate the inventive electronic circuit with different voltage levels at the voltage supply, such as 6-12V, 50-60Hz AC, with the same relay.

A particularly preferred embodiment of the inventive electrical circuit is **characterized in that** the auxiliary circuit comprises a shut-down circuit with a signalling input, and that the auxiliary circuit provides so few or no current to the switching inputs of the relay such that the relay switch switches into the "open" position when a specific signal is present at the signalling input. In this embodiment, the auxiliary circuit has an additional functionality, namely blowing the second fuse in case of a malfunction of the electronic component as signalled via the additional signalling input with said specific signal. The specific signal, which indicates the malfunction of the electronic component, is typically provided by the electronic component directly, for example as a result of a failed self-test. When the specific signal is present at the signalling input, the shut-down circuit (or functionality) of the auxiliary request reduces or cuts the current through the auxiliary circuit outputs, so the relay switch goes into the "open" default position. Then the second fuse is subject to the regular current, which makes the second fuse blow (Note that for this embodiment, the nominal current of the second fuse must be lower, and preferably should be much lower such as a factor of five or more, than the regular current through the electronic device during normal operation). The shut-down circuit can be a relay in series with an auxiliary circuit output, switched by the specific signal, for example. So in summary, in this embodiment, the second fuse is blown in two cases, namely when the electronic component has a short-circuit (or at least a significantly lowered resistance), and when the electronic component reports a malfunction via the signalling input. Malfunctions reported may include, for example, the defect of a part of the LEDs of the electronic component (e.g. a railway signal), which typically does not cause a short-circuit of the electronic component, but should end the further use of the electronic component for the reason of railway service security.

A preferred further development of the above mentioned embodiment is **characterized in that** the shut-down circuit comprises a thyristor, in particular an optothyristor, which becomes conductive as soon as the specific signal is present at the signalling input. A thyristor has a memory function: it stays conductive even after the specific signal (acting as "ignition voltage") has ended. Therefore, even short-lasting specific signals may be processed safely, thus allowing a very safe cut-off of the defect electronic component. With the opthothyristor, a potential separation between the electronic component and the shut-off-circuit can be achieved, what increases the overall safety.

In an additional development, the thyristor is connected such that in the conductive state, the thyristor short-circuits a control voltage within the auxiliary circuit which controls the current through the auxiliary circuit outputs. In this design, complex mechanical components such as relays may be avoided. The control voltage, which originates directly or indirectly from the voltage at the auxiliary circuit inputs, is short-circuited, in this way simulating the case that the voltage across the electronic component has dropped. The thyristor-generated short-circuit causes the current at the auxiliary circuit outputs to cease, and thus causes the opening of the relay switch. Typically the thyristor is connected in parallel to the voltage inputs of a VCCS of the auxiliary circuit, or is in parallel to the collector or gate of a transistor.

Finally, in a preferred embodiment of the inventive electronic circuit, for the first nominal current IN1 and the second nominal current IN2 applies: IN2 ≤ 0.3*IN1, in particular IN2 ≤ 0.1*IN1. In other words, the nominal current of the first fuse should be at least about three times as high, and may be in particular ten times as high, as the nominal current of the second fuse. In practice, good results were achieved with a nominal current of the second fuse IN2 of about 1/10 of the nominal current of the first fuse. With this embodiment, a quick blowing of the second fuse is achieved. Note that the nominal current IN1 of the first fuse should be about 0.75 up to 1.00 times the regular current (i.e. the current when the electronic component works normatiy). If the latter is respected, the second fuse should blow without problems when the regular current flows through it as a result of the shut-down circuit functionality in this embodiment. Note that the types of the first and second fuse (i.e. the nominal currents, as well as the reaction times, such as delay action or fast action due to the melting characteristics) should be chosen according to the electronic component to be protected, i.e. according to the intended or required safety characteristic of the overall electronic circuit.

Further advantages can be extracted from the description and the enclosed drawing. The embodiments mentioned are not to be understood as exhaustive enumeration but rather have exemplary character for the description of the invention.

### Drawing

The invention is shown in the drawing.
- Fig. 1: shows a circuit diagram of a first embodiment of an inventive electronic circuit comprising a voltage controlled current source;
- Fig. 2: shows a circuit diagram of a second embodiment of an inventive electronic circuit comprising a MOSFET;
- Fig. 3: shows a circuit diagram of a third embodiment of an inventive electronic circuit comprising an NPN transistor.

The invention relates to an electronic circuit which protects an electronic component by means of fuses, wherein the electronic component can be separated from the power source (voltage supply) when only a slight excess of the nominal current occurs.

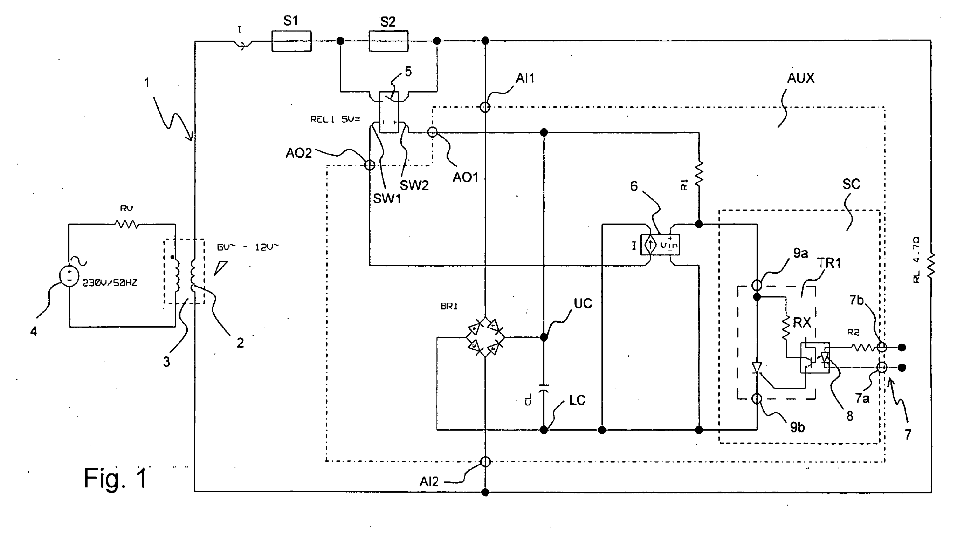

**Fig. 1** illustrates an embodiment of an inventive electronic circuit 1 by way of example. It comprises a voltage supply 2, a first fuse S1, a second fuse S2, an electronic component RL, a relay REL1, and an auxiliary circuit AUX.

The voltage supply 2 is here the secondary coil of a transformer 3. Its primary coil is connected to a net supply 4 of 230V / 50 Hz AC voltage. The net supply 4 is connected to the primary coil via a lengthy supply line, which introduces an (ohmic) line resistance RV into the primary side. The voltage supply 2 provides a 50 Hz AC voltage, with a peak voltage of 12 V (Note that due to the characteristics of the auxiliary circuit AUX in this embodiment, the peak voltage may be chosen if desired in some range, such as 6 V to 12 V, see below).

In series with the voltage supply 2 are the first fuse S1 and the second fuse S2. The first fuse S1 has a nominal current IN1 of here 3.15 A. The first fuse S1 may be a of FI type. The second fuse S2 has a nominal current IN2 of here 0.315 A, that is IN2 = 0.1*IN1.

Further in series with the voltage supply 2 and the fuses S1, S2 is the electronic component RL, which is to be protected against too high currents. The electronic component RL is here the LED device of a railway signal. During normal operation, the electronic component RL has a relatively stable (ohmic) resistance, resulting in a regular current IR through the electronic circuit 1 of here IR=2.55 A (so RL has about 4.7 ohm here). Note that the electronic component RL may, in general and in accordance with the invention, comprise ohmic, capacitive and/or inductive resistance portions.

Connected in parallel to the second fuse S2 is a relay switch 5 of a relay REL1. The relay REL1 has two switching inputs SW1, SW2. The default position of the relay switch 5 is "open", in which the bypass of the second fuse S2 is broken. If a sufficient current runs through the switching inputs SW1, SW2, then the relay switch is put into and held in a "closed" position, in which the bypass of the second fuse S2 is active. Note that during normal operation of the electronic component RL, the relay switch 5 is held in the "closed" position, in order to keep the regular current IR away from the second fuse S2 (Note that the regular current IR of 2.55 A would soon blow the second fuse, having a nominal current IN2 of 0,315 A; further note that preferably, IN2 ≤ 0.2*IR).

Connected in parallel to the electronic component is the auxiliary circuit,
wherein auxiliary current inputs AI1, AI2 tap the voltage across the electronic component RL (Note here that it is sufficient for the functioning of the invention when a voltage is tapped which indicates the voltage present across the electronic component, so one could also tap for example a series connection of the electronic component and a resistor).

The auxiliary circuit inputs AI1, AI2 are connected to a bridge rectifier BR1, the outputs of which are connected to a loading capacitor CL. Across the loading capacitor CL, a relatively smooth DC voltage is available; its value is dependent on the voltage across the electrical component RL.

The loading capacitor CL powers a voltage controlled current supply (VCCS) 6, namely its voltage inputs, via a series resistor R1. So a defined fraction of the voltage across the loading capacitor CL, as defined by R1, can be used as a control voltage at the VCCS 6.

Further, the loading capacitor CL powers the switching inputs SW1, SW2 of the relay REL1. The upper contact UC of the loading capacitor CL is connected to an auxiliary circuit output A01, which is in turn connected to the second switching input SW2. The first switching input SW1 is connected to one of the current outputs of the VCCS 6, and the other current output of the VCCS 6 is connected to the lower contact of the loading capacity CL. So in the end, the VCCS 6 controls the current through the switching contacts SW1, SW2, since the VCCS 6 resp. its current outputs are in series with the switching inputs SW1, SW2. Note that the VCCS 6 effects a rather stable voltage at the switching contacts SW1, SW2, even if the voltage at the loading capacitor CL fluctuates.

When the voltage supply 2 provides its voltage to the electronic circuit 1 for the first time (corresponding to a "switching on" of the electronic component RL), the relay switch 5 is open, and current starts to flow through the first fuse S1, the second fuse S2, and the electronic component RL. The current increases up to the regular current. This is potentially dangerous for the second fuse S2. However, when the electronic component RL operates normally, the voltage of the voltage supply 2 is present basically across the electronic component RL. This results in a loading of the loading capacitor CL via the bridge rectifier BR1.

With the loading of the loading capacitor CL, the control voltage present at the voltage inputs of the VCSS 6 also increases, and therefore also the current through the switching contacts SW1, SW2 of the relay REL1 increases. When the control voltage is high enough, the current through the switching contacts SW1, SW2 of the relay REL1 will be high enough to make the relay switch 5 switch into the closed position. Then the second fuse S2 is bypassed by the relay switch 5, and the regular current will flow through the relay switch 5 (Note that the relay switch 5 has a much lower resistance than the second fuse S2 in order to be effective as a bypass). The relay switch 5 is shut very quickly, typically after about 10 ms after the "switching on" of the electronic component RL, what is too short for the second fuse S2 to blow.

Now what happens if the electronic component RL exhibits a short circuit (or at least a sharp drop in resistance)? Due to the reduced overall resistance of the electronic circuit 1, the current I within the electronic circuit 1 (i.e. through the first fuse S1 and the electronic component RL) will increase. If the increase of the current I was large enough (such as to 15 A or more here), the first fuse S1 would blow practically immediately, and the electronic component RL would be safe. However, in the example shown in Fig. 1, there is a rather large line resistance RV on the primary side of the transformer 3, which limits the increase of the current I on the secondary side (i.e. in the electronic circuit 1) to (here) 3.5 A. So the current I is only about 11 % above the nominal current of the first fuse S1 (IN1= 3.15 A), what means that it would take rather long for the first fuse S1 to blow. However, this would possibly damage the electronic component RL further, and also the functionality of the electronic component RL would most probably be no more intact. Therefore, the electronic component RL should be deactivated faster.

This is achieved by means of the invention, in particular by the auxiliary circuit AUX. Due to the short circuit (or sharp resistance drop) in the electronic component RL, the voltage of the voltage supply 2 will no more (or at least only to a small degree) show up at the electronic component RL, but show up (at least predominantly) at the first fuse S1. Thus across the auxiliary circuit inputs AI1, AI2, the voltage drops. The loading capacitor CL is discharged, in particular by the current flow through the relay REL1 (namely through the switching contacts SW1, SW2 which power an electromagnet here), but there is no more sufficient recharging via the bridge rectifier BR1 to compensate this. As a result, the control voltage at the voltage inputs ("V in") of the VCCS 6 drops, what reduces the current flow through the switching contacts SW1, SW2. When said current flow has decreased enough, the relay switch 5 will go into its open default position, so the second fuse S2 is integrated (in series) into the flow of the current I through the electronic circuit 1. Since the present current I of 3.5 A is about eleven times as high as the nominal current of the second fuse S2 (IN2= 0.315A), the second fuse S2 blows practically immediately, and the electronic component RL is safely separated from the voltage supply 2.

Note that after blowing of the second fuse S2, the loading capacitor CL can no more be charged via the voltage supply 2 to provide a control voltage at the VCCS 6, and so the relay switch 5 cannot go back into the closed state; therefore the electronic component RL will remain safe in the future, too.

In the embodiment of Fig. 1, the auxiliary circuit AUX exhibits an additional shut-down circuit SC. Said shut-down circuit SC comprises an opthothyristor TR1, which is connected (with its main contacts 9a, 9b) in parallel to the voltage inputs of the VCCS 6. Further, there is a signaling input 7, which comprises two signaling input contacts 7a, 7b here, by means of which an LED 8 can be powered (here via a series resistor R2).

The optothyristor TR1 is, in its basic state, non-conductive between the main contacts 9a, 9b. However, if the LED 8. is lit, the opthothyristor becomes conductive and stays conductive until a holding current through it ceases.

The signaling input 7 is connected to a malfunction detection system (not shown) of the electronic component RL. A malfunction can be an "LED defect" status, for example. If a malfunction of the electronic component RL is discovered by said system, the system sends a specific signal (here a simple current or a current pulse) to the signaling input 7, which ignites the LED 8. Then the optothyristor TR1 becomes conductive. This means that the voltage inputs of the VCCS 6 are short-circuited, and the control voltage breaks down. As a result, the current through the switching contacts SW1, SW2 breaks down, too, and the relay switch 5 goes into the open default position. The second fuse S2 is integrated into the current I of the electronic circuit, wherein the current I now equals the regular current IR. Since the regular current IR is 2.55 A, and the nominal current IN2 of the second fuse is only 0.315 A, the second fuse S2 blows quickly, in particular within less than a second. Thus the electronic component RL is separated from the voltage supply 2 and adopts a safe state.

Note that the loading capacitor CL is quickly discharged then via resistor R1 and the optothyristor TR1, and cannot be recharged again by the voltage supply 2 as long as the blown second fuse S2 has not been replaced.

Due to the "memory effect" of the optothyristor TR1, a rather short current pulse at the signaling input 7 is enough to initiate the blowing of the second fuse S2, what makes the reaction of the shut-down circuit SC very reliable and safe.

So in summary, the inventive electronic circuit 1 has two possibilities (two channels) to blow the second fuse S2: in case of a short circuit across the electronic component RL (e.g. across the complete electronics of an LED signal), and in case of a receiving a malfunction (functional defect) indicating specific signal.

One of the advantages of the embodiment of Fig. 1 is that it can deal with a wide range of voltages at the voltage input 2, with the same relay REL1. This makes this embodiment rather versatile. The VCCS 6 guarantees a rather constant voltage supply at the switching inputs SW1, SW2 of the relay REL1 (here 5 V DC), even if the voltage level of the voltage supply 2 varies. A voltage level between 6 V and 12 V at the voltage supply 2 can be dealt with without modifying the relay REL1.

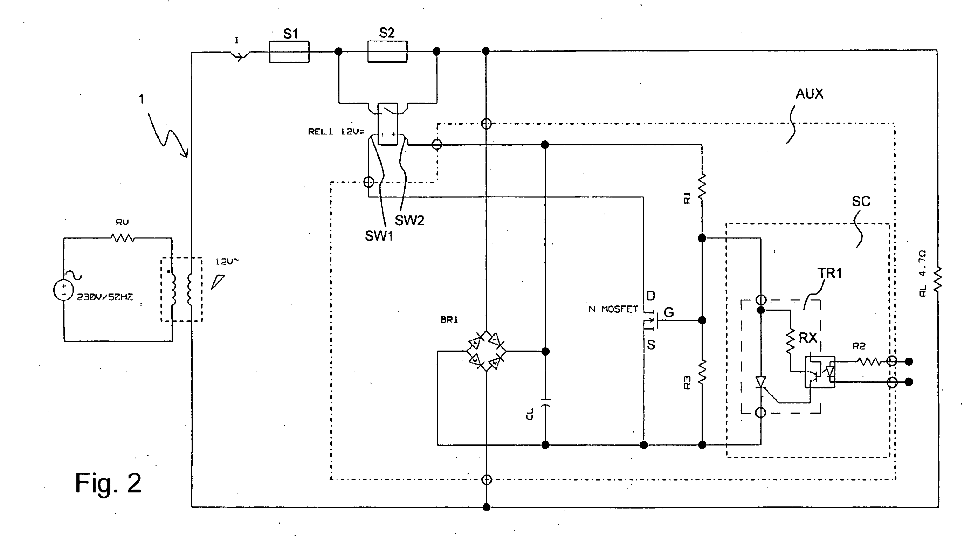

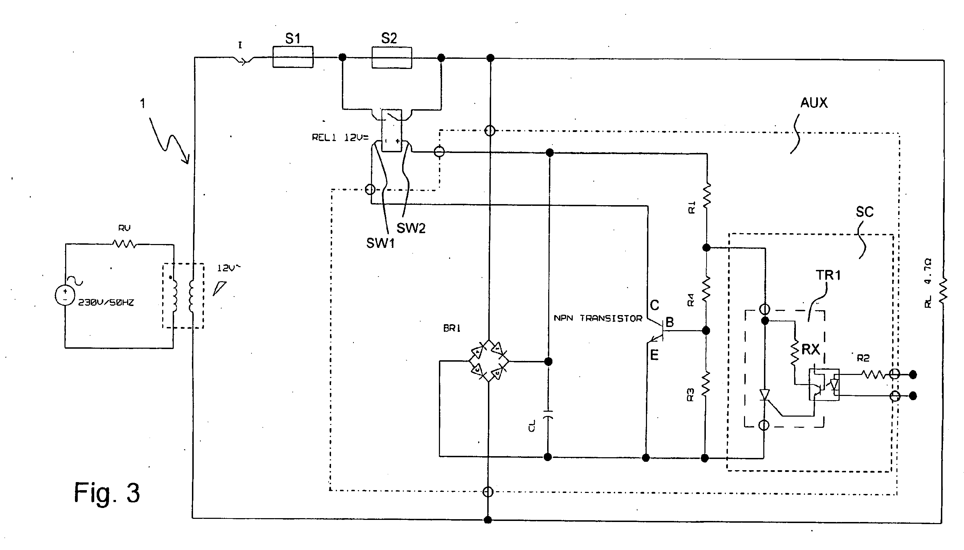

If the voltage at the voltage supply 2 is fixed, typically at 12 V, the inventive electrical circuit 1 can be simplified, as described in the embodiments of Fig. 2 and Fig. 3. In the following, only the major differences between the embodiment of Fig. 1 and the embodiments of Fig. 2 and Fig. 3 are described.

In the embodiment of **Fig. 2****,** the voltage across the loading capacitor CL is translated via a potential devider (comprising resistors R1 and R3) and fed into the gate G of a n-channel type MOSFET. Thus the control voltage (here present across resistor R3) controls the current from drain D to source S, which is identical to the current through the switching contacts SW1, SW2 of the relay REL1, which are in series. In this embodiment, the relay REL1 must be adapted to a 12 V DC voltage supply. The potential divider is here used to limit the gate-source voltage at the MOSFET when the thyristor is not conductive.

In the embodiment of **Fig. 3****,** the voltage across the loading capacitor CL is again translated via a potential divider (here comprising three resistors R1, R4, R3) and fed into the base of an npn transistor. The control voltage (here present across resistor R3) controls the current from the collector C to the emitter E, which is identical to the current through the switching contacts SW1, SW2 of the relay REL1, which are in series. In this embodiment, the relay REL1 must be adapted to a 12 V DC voltage supply. Further, in this embodiment, the control voltage (across R3) is short-circuited by the optothyristor (when it is conductive) indirectly, namely by short-circuiting the series connection of resistors R4 and R3. However, if the voltage across the series connection of R3 and R4 is zero, then also the voltage across R3 is zero. The potential divider is here used to ensure a safe turning-off of the transistor when the thyristor is conductive.

## Claims

1. Electronic circuit (1) for protecting an electronic component (RL), in particular an LED electronic component of a railway security device, comprising
- a voltage supply (2),
- a first fuse (S1), with a first nominal current (IN1), and
- an electronic component (RL),
wherein the voltage supply (2), the first fuse (S1) and the electronic component (RL) are connected in series,
- a second fuse (S2), with a second nominal current (IN2),
wherein the second fuse (S2) is connected in series with the first fuse (S1),
- an auxiliary circuit (AUX), comprising auxiliary circuit inputs (AI1, AI2) connected in parallel to the electronic component (RL), and auxiliary circuit outputs (AO1, A02),
wherein the auxiliary circuit (AUX) controls the current at the auxiliary circuit outputs (AO1, A02) by means of the voltage present at the auxiliary circuit inputs (AI1, A12),
**characterized in that**
the electronic circuit (1) comprises a relay (REL1) with a relay switch (5) and switching inputs (SW1, SW2), wherein the relay switch (5) is connected in parallel to the second fuse (S2), wherein the relay switch (5) has a default position of "open", and wherein the auxiliary circuit outputs (AO1, A02) are connected to the switching inputs (SW1, SW2) of the relay (REL1),
and that the second nominal current (IN2) is smaller than the first nominal current (IN1).

2. Electronic circuit (1) according to claim 1, **characterized in that** the auxiliary circuit (AUX) provides enough current to the switching inputs (SW1, SW2) of the relay (REL1) such that the relay switch (5) is kept in the "closed" position as long as at least a limiting voltage is present at the auxiliary circuit inputs (AI1, AI2), and wherein the auxiliary circuit (AUX) provides so few or no current to the switching inputs (SW1, SW2) of the relay (REL1) such that the relay switch (5) switches into the "open" position when less than the limiting voltage is present at the auxiliary circuit inputs (AI1, AI2).

3. Electric circuit (1) according to claim 1, **characterized in**
**that** the voltage supply (2) is an AC voltage supply, in particular the secondary side of a transformer (3),
and **that** the auxiliary circuit (AUX) comprises a rectifier, in particular a bridge rectifier (BR1).

4. Electrical circuit (1) according to claim 3, **characterized in that** the rectifier is connected to a loading capacity (CL).

5. Electrical circuit (1) according to claim 1, **characterized in that** the auxiliary circuit outputs (AO1, A02) are powered via the auxiliary circuit inputs (AI1, AI2).

6. Electrical circuit (1) according to claim 1, **characterized in that** the auxiliary circuit (AUX) comprises a transistor, with one of the auxiliary circuit inputs (AI1, AI2) connected directly or indirectly to the collector (C) or gate (G) of the transistor, and with the auxiliary circuit outputs (AO1, A02) connected in series with base-emitter (B-E) or source-drain (S-D) of the transistor.

7. Electrical circuit (1) according to claim 1, **characterized in that** the auxiliary circuit (AUX) comprises a voltage controlled current source (=VCCS) 6,
wherein voltage inputs of the VCCS (6) are connected directly or indirectly to the auxiliary circuit inputs (AI1, AI2), and wherein the auxiliary circuit outputs (AO1, A02) are connected in series with current outputs of the VCCS (6).

8. Electrical circuit (1) according to claim 1, **characterized in that** the auxiliary circuit (AUX) comprises a shut-down circuit (SC) with a signalling input (7),
and that the auxiliary circuit (AUX) provides so few or no current to the switching inputs (SW1, SW2) of the relay (REL1) such that the relay switch (5) switches into the "open" position when a specific signal is present at the signalling input (7).

9. Electrical circuit (1) according to claim 8, **characterized in that** the shut-down circuit (SC) comprises a thyristor, in particular an optothyristor (TR1), which becomes conductive as soon as the specific signal is present at the signalling input (7).

10. Electrical circuit (1) according to claim 9, **characterized in that** the thyristor is connected such that in the conductive state, the thyristor short-circuits a control voltage within the auxiliary circuit (AUX) which controls the current through the auxiliary circuit outputs (AO1, A02).

11. Electrical circuit (1) according to claim 1, **characterized in that** for the first nominal current IN1 and the second nominal current IN2 applies: IN2 ≤ 0.3*IN1, in particular IN2 ≤ 0.1*IN1.

## Patentansprüche

1. Elektronische Schaltung (1) für den Schutz eines elektronischen Bauteils (RL), insbesondere eines elektronischen LED Bauteils einer Eisenbahn-Sicherheitseinrichtung, umfassend
- eine Spannungsversorgung (2),
- eine erste Sicherung (S1) mit einem ersten Nennstrom (IN1), und
- ein elektronisches Bauteil (RL),
wobei die Spannungsversorgung (2), die erste Sicherung (S1) und das elektronische Bauteil (RL) in Serie geschaltet sind,
- eine zweite Sicherung (S2) mit einem zweiten Nennstrom (IN2),
wobei die zweite Sicherung (S2) mit der ersten Sicherung (S1) in Serie geschaltet ist,
- einen Hilfsstromkreis (AUX) umfassend Hilfsstromkreiseingänge (AI1, AI2), die mit dem elektronischen Bauteil (RL) parallel geschaltet sind, und Hilfsstromkreisausgänge (AO1, A02),
wobei der Hilfsstromkreis (AUX) den Strom an den Hilfsstromkreisausgängen (AO1, A02) mittels der Spannung, die an den Hilfsstromkreiseingängen (AI1, AI2) anliegt, steuert,
**dadurch gekennzeichnet, dass**
die elektronische Schaltung (1) ein Relais (REL1) mit einem Relaisschalter (5) und Schalteingängen (SW1, SW2) aufweist, wobei der Relaisschalter (5) mit der zweiten Sicherung (S2) parallel geschaltet ist, wobei der Relaisschalter (5) eine Standardposition "offen" hat und wobei die Hilfsstromkreisausgänge (AO1, A02) mit den Schalteingängen (SW1, SW2) des Relais (REL1) verbunden sind,
und dass der zweite Nennstrom (IN2) kleiner als der erste Nennstrom (IN1) ist.

2. Elektronische Schaltung (1) nach Anspruch 1, **dadurch gekennzeichnet, dass** der Hilfsstromkreis (AUX) die Schalteingänge (SW1, SW2) des Relais (REL1) mit ausreichend Strom versorgt, so dass der Relaisschalter (5) in der "geschlossenen" Position gehalten wird, so lange zumindest eine begrenzende Spannung an den Hilfsstromkreiseingängen (AI1, AI2) anliegt, und wobei der Hilfsstromkreis (AUX) einen so geringen oder gar keinen Strom an die Schalteingänge (SW1, SW2) des Relais (REL1) liefert, so dass der Relaisschalter (5) in die "offene" Position schaltet, wenn weniger als die begrenzende Spannung an den Hilfsstromkreiseingängen (AI1, AI2) anliegt.

3. Elektrische Schaltung (1) nach Anspruch 1, **dadurch gekennzeichnet, dass** die Spannungsversorgung (2) eine Wechselspannungsversorgung ist, insbesondere die Sekundärseite eines Transformators (3),
und dass der Hilfsstromkreis (AUX) einen Gleichrichter, insbesondere einen Brückengleichrichter (BR1) aufweist.

4. Elektrische Schaltung (1) nach Anspruch 3, **dadurch gekennzeichnet, dass** der Gleichrichter mit einer Ladekapazität (CL) verbunden ist.

5. Elektrische Schaltung (1) nach Anspruch 1, **dadurch gekennzeichnet, dass** die Hilfsstromkreisausgänge (AO1, A02) über die Hilfsstromkreiseingänge (AI1, AI2) versorgt werden.

6. Elektrische Schaltung (1) nach Anspruch 1, **dadurch gekennzeichnet, dass** der Hilfsstromkreis (AUX) einen Transistor aufweist, wobei einer der Hilfsstromkreiseingänge (AI1, AI2) direkt oder indirekt mit dem Kollektor (C) oder Gate (G) des Transistors verbunden ist und die Hilfsstromkreisausgänge (AO1, A02) mit Basis-Emitter (B-E) oder Source-Drain (S-D) des Transistors in Serie geschaltet sind.

7. Elektrische Schaltung (1) nach Anspruch 1, **dadurch gekennzeichnet, dass** der Hilfsstromkreis (AUX) eine spannungsgesteuerte Stromquelle (=VCCS) 6 aufweist,
wobei die Spannungseingänge der VCCS (6) direkt oder indirekt mit den Hilfsstromkreiseingängen (AI1, AI2) verbunden sind, und wobei die Hilfsstromkreisausgänge (AO1, A02) mit den Stromausgängen der VCCS (6) in Serie geschaltet sind.

8. Elektrische Schaltung (1) nach Anspruch 1, **dadurch gekennzeichnet, dass** der Hilfsstromkreis (AUX) einen Abschaltstromkreis (SC) mit einem Meldeeingang (7) aufweist,
und dass der Hilfsstromkreis (AUX) einen so geringen oder gar keinen Strom an die Schalteingänge (SW1, SW2) des Relais (REL1) liefert, so dass der Relaisschalter (5) in die "offene" Position schaltet, wenn ein spezifisches Signal an dem Meldeeingang (7) anliegt.

9. Elektrische Schaltung (1) nach Anspruch 8, **dadurch gekennzeichnet, dass** der Abschaltstromkreis (SC) einen Thyristor, insbesondere einen Optothyristor (TR1) aufweist, der leitend wird sobald das spezifische Signal an dem Meldeeingang (7) anliegt.

10. Elektrische Schaltung (1) nach Anspruch 9, **dadurch gekennzeichnet, dass** der Thyristor so verbunden ist, dass der Thyristor im leitenden Zustand eine Steuerspannung innerhalb des Hilfsstromkreises (AUX) kurzschließt, welche den Strom durch die Hilfsstromkreisausgänge (AO1, A02) steuert.

11. Elektrische Schaltung (1) nach Anspruch 1, **dadurch gekennzeichnet, dass** für den ersten Nennstrom IN1 und den zweiten Nennstrom IN2 gilt: IN2≤0,3*IN1, insbesondere IN2≤0,1*IN1.

## Revendications

1. Circuit électronique (1) pour protéger un composant électronique (RL), en particulier un composant électronique à LED d'un dispositif de sécurité ferroviaire, comprenant :
- une alimentation de tension (2),
- un premier fusible (S1), avec un premier courant nominal (IN1), et
- un composant électronique (RL),
où l'alimentation de tension (2), le premier fusible (S1) et le composant électronique (RL) sont connectés en série,
- un second fusible (S2), avec un second courant nominal (IN2),
où le second fusible (S2) est connecté en série avec le premier fusible (S1),
- un circuit auxiliaire (AUX), comprenant des entrées de circuit auxiliaire (AI1, AI2) connecté en parallèle au composant électronique (RL), et des sorties de circuit auxiliaire (AO1, A02),
où le circuit auxiliaire (AUX) commande le courant au niveau des sorties de circuit auxiliaire (AO1, A02) au moyen de la tension présente au niveau des entrées de circuit auxiliaire (AI1, AI2),
**caractérisé en ce que**
le circuit électronique (1) comprend un relais (REL1) avec un commutateur à relais (5) et des entrées de commutation (SW1, SW2), où le commutateur à relais (5) est connecté en parallèle au second fusible (S2), où le commutateur à relais (5) a une position par défaut "ouverte", et où les sorties de circuit auxiliaire (AO1, A02) sont connectées aux entrées de commutation (SW1, SW2) du relais (REL1),
et **en ce que** le second courant nominal (IN2) est plus faible que le premier courant nominal (IN1).

2. Circuit électronique (1) selon la revendication 1, **caractérisé en ce que** le circuit auxiliaire (AUX) délivre une quantité telle de courant aux entrées de commutation (SW1, SW2) du relais (REL1) que le commutateur à relais (5) est maintenu dans la position "fermée" aussi longtemps qu'au moins une tension limite est présente au niveau des entrées de circuit auxiliaire (AI1, AI2), et où le circuit auxiliaire (AUX) délivre si peu de courant, ou aucun courant, aux entrées de commutation (SW1, SW2) du relais (REL1) que le commutateur à relais (5) commute dans la position "ouverte" lorsqu'une tension inférieure à la tension limite est présente au niveau des entrées de circuit auxiliaire (AI1, AI2).

3. Circuit électrique (1) selon la revendication 1, **caractérisé en ce que** l'alimentation de tension (2) est une alimentation de tension alternative AC, en particulier le côté secondaire d'un transformateur (3),
et **en ce que** le circuit auxiliaire (AUX) comprend un redresseur, en particulier un pont redresseur (BR1).

4. Circuit électrique (1) selon la revendication 3, **caractérisé en ce que** le redresseur est connecté à une capacité de charge (CL).

5. Circuit électronique (1) selon la revendication 1, **caractérisé en ce que** les sorties de circuit auxiliaire (AO1, A02) sont alimentées via les entrées de circuit auxiliaire (AI1, AI2).

6. Circuit électrique (1) selon la revendication 1, **caractérisé en ce que** le circuit auxiliaire (AUX) comprend un transistor, avec une des entrées de circuit auxiliaire (AI1, AI2) connectée directement ou indirectement au collecteur (C) ou à la grille (G) du transistor, et avec les sorties de circuit auxiliaire (AO1, A02) connectées en série avec la base-émetteur (B-E) ou la source-drain (S-D) du transistor.

7. Circuit électrique (1) selon la revendication 1, **caractérisé en ce que** le circuit auxiliaire (AUX) comprend une source de courant en tension contrôlée (=VCCS) 6,
où des entrées de tension du VCCS (6) sont connectées directement ou indirectement aux entrées de circuit auxiliaire (AI1, AI2), et où les sorties de circuit auxiliaire (AO1, A02) sont connectées en série avec les sorties de courant du VCCS (6).

8. Circuit électrique (1) selon la revendication 1, **caractérisé en ce que** le circuit auxiliaire (AUX) comprend un circuit de coupure (SC) avec une entrée de signalisation (7),
et **en ce que** le circuit auxiliaire (AUX) délivre si peu de courant, ou aucun courant, aux entrées de commutation (SW1, SW2) du relais (REL1) que le commutateur à relais (5) commute dans la position "ouverte" lorsqu'un signal spécifique est présent au niveau de l'entrée de signalisation (7).

9. Circuit électrique (1) selon la revendication 8, **caractérisé en ce que** le circuit de coupure (SC) comprend un thyristor, en particulier un optothyristor (TR1), lequel devient conducteur dès que le signal spécifique est présent au niveau de l'entrée de signalisation (7).

10. Circuit électrique (1) selon la revendication 9, **caractérisé en ce que** le thyristor est connecté de manière à ce que dans l'état conducteur, le thyristor court-circuite une tension de commande au sein du circuit auxiliaire (AUX) qui commande le courant à travers les sorties de circuit auxiliaire (AO1, A02).

11. Circuit électrique (1) selon la revendication 1, **caractérisé en ce que** pour le premier courant nominal IN1 et le second courant nominal IN2 s'applique les relations : IN2 ≤ 0,3*IN1, en particulier IN2 ≤ 0,1*IN1.
